# EUROPEAN PATENT SPECIFICATION

(11) **EP 2 654 311 B1**
(45) Date of publication and mention of the grant of the patent: **08.02.2017**
(21) Application number: 11849697.5
(22) Date of filing: 25.10.2011
(51) Int. Cl.: H04N 21/266, H04N 21/438, H04N 21/6405, H04N 21/2343

(54) **SYNCHRONIZATION METHOD AND SYNCHRONIZATION APPARATUS FOR MULTICAST GROUP QUICK ACCESS, AND TERMINAL**
SYNCHRONISATIONSVERFAHREN UND SYNCHRONISATIONSVORRICHTUNG FÜR SCHNELLZUGRIFF AUF MULTICAST-GRUPPEN SOWIE ENDGERÄT DAFÜR
PROCÉDÉ DE SYNCHRONISATION ET APPAREIL DE SYNCHRONISATION POUR UN ACCÈS RAPIDE À UN GROUPE DE MULTIDIFFUSION, ET TERMINAL

(30) Priority: 15.12.2010 CN 201010589762
(43) Date of publication of application: 23.10.2013
(73) Proprietor: ZTE Corporation, Shenzhen, Guangdong 518057 (CN)
(72) Inventor: LIN, Ya, Shenzhen Guangdong 518057 (CN); ZHONG, Hong, Shenzhen Guangdong 518057 (CN); LI, Jiazhou, Shenzhen Guangdong 518057 (CN); RUAN, Yaping, Shenzhen Guangdong 518057 (CN)
(74) Representative: Price, Nigel John King
(86) International application number: PCT/CN2011/081274
(87) International publication number: WO 2012/079428

(56) References cited:
- WO-A1-2010/114450
- CN-A- 101 370 139
- CN-A- 101 742 269
- US-A1- 2007 174 880
- US-A1- 2008 187 075
- US-A1- 2009 064 242
- US-A1- 2010 036 964
- US-A1- 2010 205 322
- SIEBERT P ET AL: "Analysis and Improvements of Zapping Times in IPTV Systems", IEEE TRANSACTIONS ON BROADCASTING, IEEE SERVICE CENTER, PISCATAWAY, NJ, US, vol. 55, no. 2, 1 June 2009 (2009-06-01), pages 407-418, XP011343473, ISSN: 0018-9316, DOI: 10.1109/TBC.2008.2012019

## Description

### TECHNICAL FIELD

The disclosure relates to the field of communication technology, and in particular to a synchronization method and apparatus for multicast group quick access, and a terminal.

### BACKGROUND

Currently, it is an important technology in the field of multicast video technology to reduce the access time delay of a terminal before joining a multicast session and reduce the waiting time for frequent switching of multicast sessions.

In a traditional multicast video service, a multicast server generally sends random access points in a fixed period, in order to ensure that terminals joining a multicast group at different times are able to play a video. In addition, the fixed period is set very short so that a new terminal in the multicast group can play the video rapidly. Since the coding time and the sizes of coded frames of the random access points are far greater than those of common frames coded through inter-frame coding, a relative short random access point period will reduce the efficiency of coding, decoding and transmitting.

To solve the problem above, a quick access technical solution of a multicast real-time transport protocol session of the Internet Engineering Task Force (IETF) provides a method for quick multicast access of a terminal in a multicast real-time transport protocol multicast session. Such a method can reduce the time delay of the terminal before joining the multicast session, reduce the waiting time of playing of a video and improve user experience.

However, the method above brings the problem of unsynchronized data among terminals, and different terminals receive different video random access points when accessing the same multicast group at different times, thus different terminals play different videos at the same moment. The longer a time interval between adjacent random access points is, the longer a playing delay between terminals will be.

In streaming media multicast applications including Internet Protocol Television (IPTV), video conferences and distance education etc., an excessive delay between terminals will reduce user experience, and even result in an information transfer error to influence normal application of a terminal user service.

WO 2010/114450 A1 discloses methods and arrangements for providing an improved channel change solution for an IPTV system. This is achieved by sending an additional FCC (Fast Channel Change) media stream using multicast from a fast channel change server. The FCC media stream contains a stream being a copy of the main stream wherein the speed is higher than the speed of the main stream. The FCC media stream may start with an I or S-frame and a number of STBs can use the same FCC multicast stream.

US 2007/0174880 A1 discloses a method, apparatus, and system for rapid switching between encoded video streams while introducing a reduced amount of additional information during the switch. For example, a method of encoding uncompressed video frames in accordance with embodiments of the invention includes producing a first stream having a first key frame, a second key frame, and a delta frame therebetween; and producing a second streanl having said first key frame, said second key frame, and a third key frame therebetween, wherein said third key frame corresponds with said delta frame. Other features are described and claimed.

### SUMMARY

The main purpose of the disclosure is to provide a synchronization method and apparatus for multicast group quick access, and a terminal so as to allow synchronous playing of multicast data on different terminals, thus improving terminal user experience.

To realize the purpose above, the technical solution of the disclosure is realized by the following ways.

The features of the methods, apparatus, and terminal according to the present disclosure are defined in the independent claims, and the preferable features according to the present invention are defined in the dependent claims.

It can be learned from the foregoing description that, by re-coding frame multicast data that cannot be independently decoded into frame multicast data that can be independently decoded, selecting, according to a multicast group quick access request, certain frame multicast data for initial playing that can be independently decoded, and sending the frame multicast data for initial playing that can be independently decoded and subsequent multicast data to a terminal, a synchronization method and synchronization apparatus for multicast group quick access, and a terminal provided by the disclosure enable the terminal to play the selected frame multicast data for initial playing that can be independently decoded and the subsequent multicast data, thus allowing synchronous playing of multicast data on different terminals and improving terminal user experience.

### BRIEF DESCRIPTION OF THE DRAWINGS

Fig. 1 is a flowchart of a synchronization method for multicast group quick access according to an embodiment of the disclosure;
Fig. 2 is a structural diagram of a synchronization apparatus for multicast group quick access according to an embodiment of the disclosure;
Fig. 3 is a structural diagram of a synchronization apparatus for multicast group quick access according to another embodiment of the disclosure;
Fig. 4 is a structural diagram of a synchronization apparatus for multicast group quick access according to a third embodiment of the disclosure;
Fig. 5 is a flowchart of a synchronization method for multicast group quick access according to another embodiment of the disclosure; and
Fig. 6 is a structural diagram of a terminal for multicast group quick access according to an embodiment of the disclosure.

### DETAILED DESCRIPTION

It should be understood that the specific embodiments described herein are only used for explaining the disclosure, instead of limiting the disclosure.

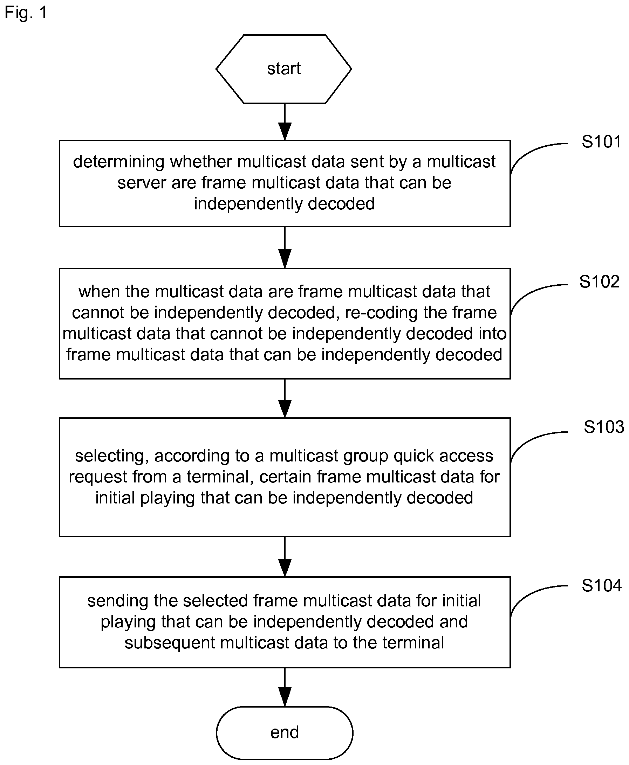

Referring to Fig. 1, which is a flowchart of a synchronization method for multicast group quick access according to an embodiment of the disclosure, the method includes the following steps:
Step 101: it is determined whether multicast data sent by a multicast server are frame multicast data that can be independently decoded;
Step 102: when the multicast data are frame multicast data that cannot be independently decoded, the frame multicast data that cannot be independently decoded are re-coded into frame multicast data that can be independently decoded;
Step 103: when a multicast group quick access request is received from a terminal, certain frame multicast data that can be independently decoded are selected for initial playing; and
Step 104: the selected frame multicast data for initial playing that can be independently decoded and subsequent multicast data are sent to the terminal.

The frame multicast data for initial playing that can be independently decoded are the first multicast data received by the terminal. At the same time, the first multicast data are frame multicast data that can be independently decoded.

Further, in the above embodiment of the synchronization method for multicast group quick access, after it is determined whether the multicast data sent by the multicast server are the frame multicast data that can be independently decoded, the method may further include: when the multicast data are frame multicast data that cannot be independently decoded, the frame multicast data that cannot be independently decoded are backed up.

Further, in the above embodiment of the synchronization method for multicast group quick access, the selected frame multicast data for initial playing that can be independently decoded may be the re-coded frame multicast data that can be independently decoded, or the frame multicast data that are sent by the multicast server and can be independently decoded.

When the selected frame multicast data for initial playing that can be independently decoded are the re-coded frame multicast data that can be independently decoded, the subsequent multicast data are: re-coded frame multicast data that can be independently decoded subsequent to the selected frame multicast data for initial playing that can be independently decoded.

When the selected frame multicast data for initial playing that can be independently decoded are the frame multicast data that are sent by the multicast server and can be independently decoded, the subsequent multicast data are: frame multicast data that cannot be independently decoded subsequent to the selected frame multicast data for initial playing that can be independently decoded.

In the above embodiment of the synchronization method for multicast group quick access, when the frame multicast data for initial playing that can be independently decoded are frame multicast data that are sent by the multicast server directly and can be independently decoded, the terminal, after receiving the frame multicast data for initial playing that can be independently decoded, decodes and plays the frame multicast data for initial playing that can be independently decoded, then may decode and play the received subsequent frame multicast data that cannot be independently decoded. When the frame multicast data for initial playing that can be independently decoded are the re-coded frame multicast data that can be independently decoded, after the frame multicast data for initial playing that can be independently decoded are played and decoded, the subsequently received frame multicast data that cannot be independently decoded cannot be played and decoded. Therefore, when the selected frame multicast data for initial playing that can be independently decoded are the re-coded frame multicast data that can be independently decoded, the subsequent multicast data sent to the terminal should be the re-coded frame multicast data that can be independently decoded so that the terminal can decode and play the subsequent multicast data.

Further, in the above embodiment of the synchronization method for multicast group quick access, after the frame multicast data for initial playing that can be independently decoded are selected, the method may further include: a playing strategy is generated according to the selected frame multicast data for initial playing that can be independently decoded, and the playing strategy is sent to the terminal so that the terminal can play the selected frame multicast data for initial playing that can be independently decoded and the subsequent multicast data according to the playing strategy.

By means of re-coding the frame multicast data that cannot be independently decoded into the frame multicast data that can be independently decoded, when the multicast group quick access request is received, the frame multicast data for initial playing that can be independently decoded are selected, and the playing strategy is generated, then the frame multicast data for initial playing that can be independently decoded, the subsequent multicast data and the playing strategy are sent to the terminal so that the terminal can play the frame multicast data for initial playing that can be independently decoded and the subsequent multicast data according to the playing strategy Therefore, the embodiment of the synchronization method for multicast group quick access allows synchronous playing of multicast data on different terminals, thus improving terminal user experience.

Further, the following processing may be included before Step 101 in the above embodiment of the synchronization method for multicast group quick access: the multicast data sent by the multicast server and a multicast data frame type are stored, and a corresponding relation among the multicast data, the multicast data frame type and a multicast group identifier is established, wherein the multicast data frame type includes: a frame that can be independently decoded or a frame that cannot be independently decoded, i.e. the multicast data sent by the multicast server are frame multicast data that can be independently decoded or frame multicast data that cannot be independently decoded.

Whether the multicast data sent by the multicast server are frame multicast data that can be independently decoded or not is determined according to the multicast data frame type.

The multicast group quick access request sent by the terminal includes: caching capability information and bandwidth information of the terminal and an identifier of a multicast group which the terminal is about to access (i.e. a to-be-accessed multicast group identifier).

When selecting the frame multicast data for initial playing that can be independently decoded, multicast data sent by a multicast server is searched for firstly according to a to-be-accessed multicast group identifier sent by the terminal, and either of initial frame multicast data that can be independently decoded and correspond to the multicast data sent by the multicast server and the re-coded frame multicast data that can be independently decoded are selected subsequently as the frame multicast data for initial playing that can be independently decoded. The initial frame multicast data that can be independently decoded are frame multicast data that can be independently decoded and are sent by the multicast server directly.

Further, in the above embodiment of the synchronization method for multicast group quick access, the broadband occupied by the re-coded frame multicast data that can be independently decoded is smaller than or equal to the broadband occupied by the frame multicast data before the re-coding.

A plurality of algorithms may be applied to re-code the frame multicast data that cannot be independently decoded into the frame multicast data that can be independently decoded, as long as the complexity of the calculation process is low with a short time delay, e.g. sampling is performed after reconstruction of the initial frame multicast data and inter-frame coding is performed subsequently.

Further, in the above embodiment of the synchronization method for multicast group quick access, a specific process of selecting the frame multicast data for initial playing that can be independently decoded and generating the playing strategy may include:
determining whether the current received frame multicast data sent by the multicast server are frame multicast data that can be independently decoded;
if yes, selecting the current frame multicast data that can be independently decoded as the frame multicast data that can be independently decoded for initial playing and generating the playing strategy; sending the selected frame multicast data that can be independently decoded for initial playing and the playing strategy to the terminal and sending the frame multicast data that are subsequently sent by the multicast server and cannot be independently decoded to the terminal;
if not, calculating a time interval T1 between the current received frame multicast data that cannot be independently decoded and the previous frame multicast data that can be independently decoded, estimating a time delay T2 for re-coding the current frame multicast data that cannot be independently decoded to generate frame multicast data that can be independently decoded, and calculating the number N of frame multicast data that cannot be independently decoded between the current frame multicast data that cannot be independently decoded and the next received frame multicast data that can be independently decoded;
determining whether T1 is smaller than or equal to T2*N;
if T1 is smaller than or equal to T2*N, selecting the previous received frame multicast data that can be independently decoded as the frame multicast data that can be independently decoded for initial playing, generating the playing strategy, sending the selected frame multicast data that can be independently decoded for initial playing and the playing strategy to the terminal, and sending the subsequent received frame multicast data that cannot be independently decoded to the terminal;
if T1 is greater than T2*N, re-coding the current received frame multicast data that cannot be independently decoded into the frame multicast data that can be independently for initial playing, generating the playing strategy, then sending the selected frame multicast data that can be independently decoded for initial playing and the playing strategy to the terminal, and sending subsequent re-coded frame multicast data that can be independently decoded to the terminal.

After receiving the selected frame multicast data that can be independently decoded for initial playing, the playing strategy and the subsequent multicast data, the terminal plays according to the playing strategy, the received frame multicast data that can be independently decoded for initial playing and subsequent multicast data, wherein the subsequent multicast data are the re-coded frame multicast data that can be independently decoded or the frame multicast data that cannot be independently decoded.

Further, in the above embodiment of the synchronization method for multicast group quick access, the playing strategy may include: a playing start time of the selected frame multicast data for initial playing that can be independently decoded, and the total playing time of the selected frame multicast data for initial playing that can be independently decoded and the subsequent multicast data, so that the terminal can finish playing the frame multicast data for initial playing that can be independently decoded and the subsequent multicast data when an access point for accessing the multicast server arrives, allowing synchronous playing of multicast data on different terminals. In other words, the terminal, according to a received frame for initial playing that can be independently decoded, the subsequent multicast data, the playing starting time and the total playing time, adopts a corresponding quick playing strategy to ensure that playing of the received frame for initial playing that can be independently decoded and the subsequent multicast data is finished when the multicast server is accessed.

The subsequent frame multicast data that cannot be independently decoded may be: all received frame multicast data that cannot be independently decoded and are backed-up between the selected frame multicast data that can be independently decoded and the next received frame multicast data that can be independently decoded.

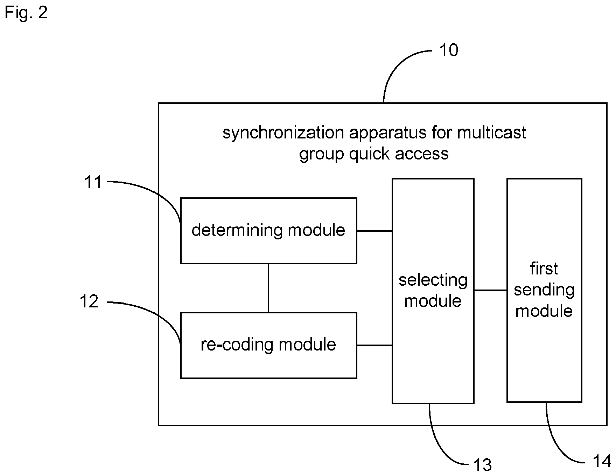

Referring to Fig. 2, which is a structural diagram of a synchronization apparatus for multicast group quick access according to an embodiment of the disclosure. The synchronization apparatus includes: a determining module 11, a re-coding module 12, a selecting module 13 and a first sending module 14.

The determining module 11 is configured to determine whether multicast data sent by a multicast server are frame multicast data that can be independently decoded. The re-coding module 12 is configured to, when the multicast data are frame multicast data that cannot be independently decoded, re-code the frame multicast data that cannot be independently decoded into frame multicast data that can be independently decoded. The selecting module 13 is configured to select, when a multicast group quick access request is received from a terminal, certain frame multicast data that can be independently decoded for initial playing. The first sending module 14 is configured to send the selected frame multicast data for initial playing that can be independently decoded and subsequent multicast data to the terminal.

The frame multicast data for initial playing that can be independently decoded are the first multicast data received by the terminal. At the same time, the first multicast data are frame multicast data that can be independently decoded.

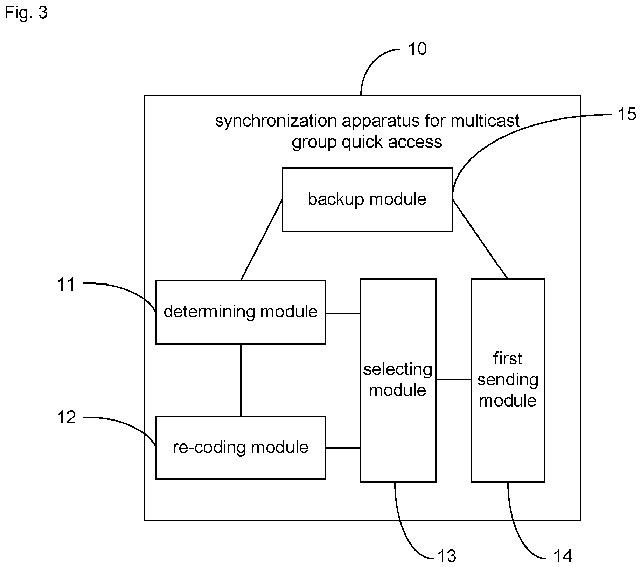

Further, referring to Fig. 3, the synchronization apparatus 10 for multicast group quick access may further include a backup module 15. The backup module 15 is configured to, when the multicast data are frame multicast data that cannot be independently decoded, back up the frame multicast data that cannot be independently decoded. The first sending module 14 may be further configured to send frame multicast data that cannot be independently decoded subsequent to the selected frame multicast data for initial playing that can be independently decoded to the terminal.

Further, in the above embodiment of the synchronization method for multicast group quick access, the selected frame multicast data for initial playing that can be independently decoded may be the re-coded frame multicast data that can be independently decoded, or the frame multicast data that are sent by the multicast server and can be independently decoded.

When the selected frame multicast data for initial playing that can be independently decoded are the re-coded frame multicast data that can be independently decoded, the subsequent multicast data are: re-coded frame multicast data that can be independently decoded subsequent to the selected frame multicast data for initial playing that can be independently decoded.

When the selected frame multicast data for initial playing that can be independently decoded are the frame multicast data that are sent by the multicast server and can be independently decoded, the subsequent multicast data are: frame multicast data that cannot be independently decoded subsequent to the selected frame multicast data for initial playing that can be independently decoded.

In the above embodiment of the synchronization method for multicast group quick access, when the frame multicast data for initial playing that can be independently decoded are frame multicast data that are sent by the multicast server directly and can be independently decoded, the terminal, after receiving the frame multicast data for initial playing that can be independently decoded, decodes and plays the frame multicast data for initial playing that can be independently decoded, then may decode and play the received subsequent frame multicast data that cannot be independently decoded. When the frame multicast data for initial playing that can be independently decoded are the re-coded frame multicast data that can be independently decoded, after the frame multicast data for initial playing that can be independently decoded are played and decoded, the subsequently received frame multicast data that cannot be independently decoded cannot be played and decoded. Therefore, when the selected frame multicast data for initial playing that can be independently decoded are the re-coded frame multicast data that can be independently decoded, the subsequent multicast data sent to the terminal should be the re-coded frame multicast data that can be independently decoded so that the terminal can decode and play the subsequent multicast data.

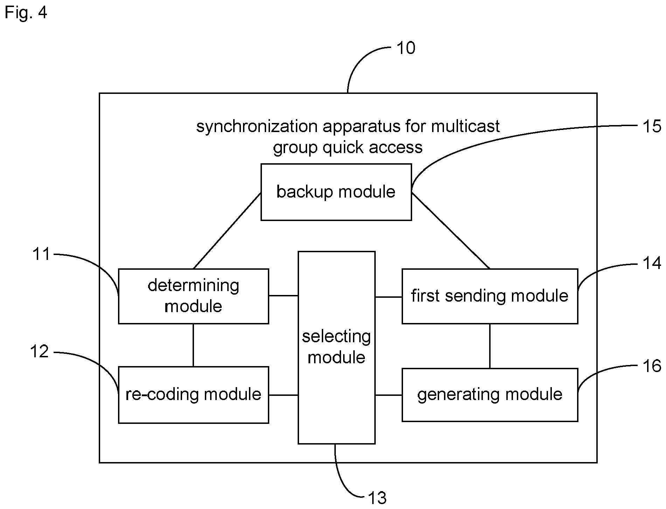

Further, referring to Fig. 4, the synchronization apparatus 10 for multicast group quick access may further include a generating module 16. The generating module 16 is configured to, according to the selected frame multicast data for initial playing that can be independently decoded, generate a playing strategy, and send through the first sending module 14 the playing strategy to the terminal so that the terminal can play the selected frame multicast data for initial playing that can be independently decoded and the subsequent multicast data according to the playing strategy.

By means of re-coding the frame multicast data that cannot be independently decoded into the frame multicast data that can be independently decoded, when the multicast group quick access request is received, the frame multicast data for initial playing that can be independently decoded are selected, and the playing strategy is generated, then the frame multicast data for initial playing that can be independently decoded, the subsequent multicast data and the playing strategy are sent to the terminal so that the terminal can play the frame multicast data for initial playing that can be independently decoded and the subsequent multicast data according to the playing strategy. Therefore, the embodiment of the synchronization apparatus 10 for multicast group quick access allows synchronous playing of multicast data on different terminals, thus improving terminal user experience.

Further, the synchronization apparatus 10 for multicast group quick access may be further configured to store the multicast data sent by the multicast server and a multicast data frame type, and establish a corresponding relation among the multicast data, the multicast data frame type and a multicast group identifier, wherein the multicast data frame type includes: a frame that can be independently decoded or a frame that cannot be independently decoded, i.e. the multicast data sent by the multicast server are frame multicast data that can be independently decoded or frame multicast data that cannot be independently decoded.

Whether the multicast data sent by the multicast server are frame multicast data that can be independently decoded or not is determined according to the multicast data frame type.

The multicast group quick access request sent by the terminal includes: caching capability information and bandwidth information of the terminal and an identifier of a multicast group which the terminal is about to access (i.e. a to-be-accessed multicast group identifier).

When selecting the frame multicast data for initial playing that can be independently decoded, multicast data sent by a multicast server is searched for firstly according to a to-be-accessed multicast group identifier sent by the terminal, and either of initial frame multicast data that can be independently decoded and correspond to the multicast data sent by the multicast server and the re-coded frame multicast data that can be independently decoded are selected subsequently as the frame multicast data for initial playing that can be independently decoded. The initial frame multicast data that can be independently decoded are frame multicast data that can be independently decoded and are sent by the multicast server directly.

Further, in the above embodiment of the synchronization apparatus 10 for multicast group quick access, the broadband occupied by the re-coded frame multicast data that can be independently decoded is smaller than or equal to the broadband occupied by the frame multicast data before the re-coding.

A plurality of algorithms may be applied to re-code the frame multicast data that cannot be independently decoded into the frame multicast data that can be independently decoded, as long as the complexity of the calculation process is low with a short time delay, e.g. sampling is performed after reconstruction of the initial frame multicast data and inter-frame coding is performed subsequently.

Further, in the above embodiment of the synchronization apparatus 10 for multicast group quick access, the selected frame multicast data that can be independently decoded are the frame multicast data that can be independently decoded and are sent by the multicast server or the re-coded frame multicast data that can be independently decoded.

Further, in the above embodiment of the synchronization apparatus 10 for multicast group quick access, the selecting module 13 may be further configured to determine whether the current received frame multicast data sent by the multicast server are frame multicast data that can be independently decoded;
if yes, select the current frame multicast data that can be independently decoded as the frame multicast data that can be independently decoded for initial playing and generate the playing strategy; send the selected frame multicast data that can be independently decoded for initial playing and the playing strategy to the terminal and send the frame multicast data that are subsequently sent by the multicast server and cannot be independently decoded to the terminal;
if not, calculate the time interval T1 between the current received frame multicast data that cannot be independently decoded and the previous frame multicast data that can be independently decoded, estimate a time delay T2 for re-coding the current frame multicast data that cannot be independently decoded to generate frame multicast data that can be independently decoded, and calculate the number N of frame multicast data that cannot be independently decoded between the current frame multicast data that cannot be independently decoded and the next received frame multicast data that can be independently decoded;
determine whether T1 is smaller than or equal to T2*N;
if T1 is smaller than or equal to T2*N, select the previous received frame multicast data that can be independently decoded as the frame multicast data that can be independently decoded for initial playing, generate the playing strategy, send the selected frame multicast data that can be independently decoded for initial playing and the playing strategy to the terminal, and send the subsequent received frame multicast data that cannot be independently decoded to the terminal;
if T1 is greater than T2*N, re-code the current received frame multicast data that cannot be independently decoded into the frame multicast data that can be independently for initial playing, generate the playing strategy, then send the selected frame multicast data that can be independently decoded for initial playing and the playing strategy to the terminal, and send subsequent re-coded frame multicast data that can be independently decoded to the terminal.

After receiving the selected frame multicast data that can be independently decoded for initial playing, the playing strategy and the subsequent multicast data, the terminal plays according to the playing strategy, the received frame multicast data that can be independently decoded for initial playing and subsequent multicast data, wherein the subsequent multicast data are the re-coded frame multicast data that can be independently decoded or the frame multicast data that cannot be independently decoded.

Further, in the above embodiment of the synchronization apparatus 10 for multicast group quick access, the playing strategy may include: a playing start time of the selected frame multicast data for initial playing that can be independently decoded, and the total playing time of the selected frame multicast data for initial playing that can be independently decoded and the subsequent multicast data, so that the terminal finishes playing the frame multicast data for initial playing that can be independently decoded and the subsequent multicast data as soon as an access point accessing the multicast server arrives, allowing synchronous playing of multicast data on different terminals. In other words, the terminal, according to a received frame for initial playing that can be independently decoded, the subsequent multicast data, the playing starting time and the total playing time, adopts a corresponding quick playing strategy to ensure that playing of the received frame for initial playing that can be independently decoded and the subsequent multicast data is finished when the multicast server is accessed.

The subsequent frame multicast data that cannot be independently decoded may be: all received frame multicast data that cannot be independently decoded and are backed-up between the selected frame multicast data that can be independently decoded and the next received frame multicast data that can be independently decoded.

The synchronization apparatus 10 for multicast group quick access may be set on the multicast server, or set on a unicast server, or set independently.

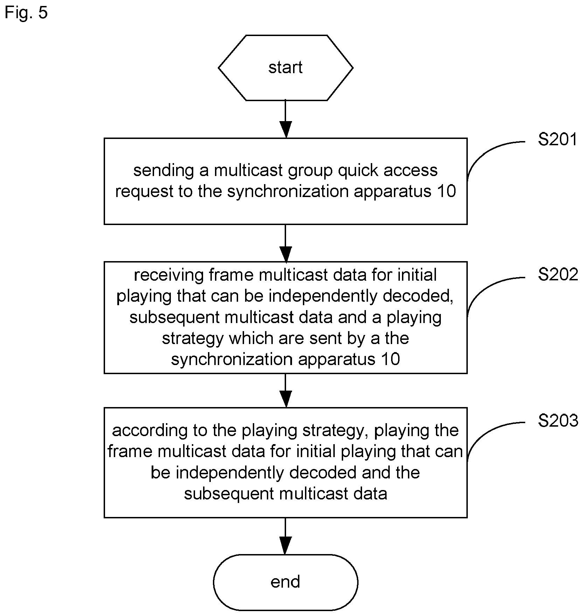

Referring to Fig. 5, which is a flowchart of a synchronization method for multicast group quick access according to another embodiment of the disclosure. Based on the synchronization apparatus 10, the process as shown in Fig. 5 includes the following steps.
Step 201: sending a multicast group quick access request to the synchronization apparatus 10;
Step 202: from the synchronization apparatus 10, receiving frame multicast data for initial playing that can be independently decoded, subsequent multicast data and a playing strategy;
Step 203: according to the playing strategy, playing the frame multicast data for initial playing that can be independently decoded and the subsequent multicast data.

The playing strategy may include: a playing start time of the selected frame multicast data for initial playing that can be independently decoded, and the total playing time of the selected frame multicast data for initial playing that can be independently decoded and the subsequent multicast data. The terminal can finish playing the frame multicast data for initial playing that can be independently decoded and the subsequent multicast data according to the playing strategy when an access point for accessing the multicast server arrives, allowing synchronous playing of multicast data on different terminals.

The frame multicast data for initial playing that can be independently decoded are frame multicast data that are sent by the multicast server and can be independently decoded, or the re-coded frame multicast data that can be independently decoded. The subsequent multicast data are the re-coded frame multicast data that can be independently decoded, or the frame multicast data that cannot be independently decoded.

Further, in the above embodiment of the synchronization method for multicast group quick access, when the frame multicast data for initial playing that can be independently decoded are the frame multicast data that are sent by the multicast server and can be independently decoded, the subsequent multicast data are the frame multicast data that cannot be independently decoded. This indicates the terminal accesses the multicast server normally.

Further, in the above embodiment of the synchronization method for multicast group quick access, when the frame multicast data for initial playing that can be independently decoded are the re-coded frame multicast data that can be independently decoded, the subsequent multicast data are the re-coded frame multicast data that can be independently decoded, and the following processing is performed after playing the frame multicast data for initial playing that can be independently decoded and the subsequent multicast data according to the playing strategy: receiving and playing the frame multicast data that are sent by the multicast server and can be independently decoded, i.e. when an access point of the multicast server arrives, the terminal accesses the multicast server normally, and receives and plays multicast data sent by the multicast server directly.

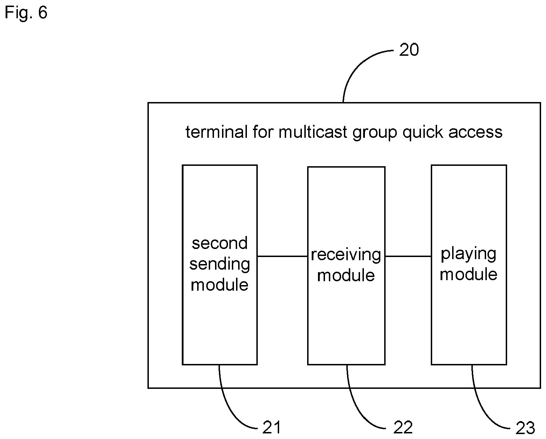

Referring to Fig. 6, which is a structural diagram of a terminal for multicast group quick access according to an embodiment of the disclosure. Based on the synchronization apparatus 10, the terminal as shown in Fig. 6 includes: a second sending module 21, a receiving module 22 and a playing module 23.

The second sending module 21 is configured to send a multicast group quick access request to the synchronization apparatus. The receiving module 22 is configured to receive frame multicast data for initial playing that are sent by the synchronization apparatus and can be independently decoded, subsequent multicast data and a playing strategy. The playing module 23 is configured to, according to the playing strategy, play the frame multicast data for initial playing that can be independently decoded and the subsequent multicast data. The playing strategy includes: a playing start time of the selected frame multicast data for initial playing that can be independently decoded, and the total playing time of the selected frame multicast data for initial playing that can be independently decoded and the subsequent multicast data. The terminal can finish playing the frame multicast data according to the playing strategy that can be independently decoded and the subsequent multicast data according to the playing strategy when an access point for accessing the multicast server arrives, allowing synchronous playing of multicast data on different terminals.

The frame multicast data for initial playing that can be independently decoded are the frame multicast data that are sent by the multicast server to the synchronization apparatus 10 and can be independently decoded, or the re-coded frame multicast data that can be independently decoded. The subsequent multicast data are the re-coded frame multicast data that are sent by the synchronization apparatus 10 and can be independently decoded, or the frame multicast data that cannot be independently decoded.

Further, in the above embodiment of the terminal 20 for multicast group quick access, when the frame multicast data for initial playing that can be independently decoded are the frame multicast data that are sent by the multicast server to the synchronization apparatus 10 and can be independently decoded, the subsequent multicast data are the frame multicast data that cannot be independently decoded. This indicates the terminal accesses the multicast server normally.

Further, in the above embodiment of the terminal 20 for multicast group quick access, the receiving module 22 may be further configured to, after playing the frame multicast data for initial playing that can be independently decoded and the subsequent multicast data according to the playing strategy, receive the frame multicast data that are sent by the multicast server and can be independently decoded and the subsequent frame multicast data that cannot be independently decoded. The playing module 23 may be further configured to play the frame multicast data that are sent by the multicast server and can be independently decoded and the subsequent frame multicast data that cannot be independently decoded. In other words, when an access point of the multicast server arrives, the terminal accesses the multicast server normally, and receives and plays multicast data sent by the multicast server directly.

It should be understood that the foregoing description are only preferred embodiments of the disclosure and not intended to limit the patent scope of the disclosure. All equivalent structures or equivalent changes of process made according to description of the disclosure and contents of the accompanying drawings, or direct or indirect applications in other related technical fields shall be also included within the scope of protection of the disclosure.

### INDUSTRIAL APPLICABILITY

The disclosure provides a synchronization method and synchronization apparatus for multicast group quick access, and a terminal. The method includes: determining whether multicast data sent by a multicast server are frame multicast data that can be independently decoded, and re-coding the multicast data into frame multicast data that can be independently decoded when the multicast data are frame multicast data that cannot be independently decoded; selecting, according to a request from the terminal, frame multicast data for initial playing that can be independently decoded; and sending the selected frame multicast data for initial playing that can be independently decoded and subsequent multicast data to the terminal. The disclosure allows synchronous playing of multicast data on different terminals, thus improving terminal user experience.

## Claims

1. A multicast access method, **characterised in that** the method comprises:
determining (S101) whether a current received frame sent by a multicast server can be independently decoded;
when the current received frame cannot be independently decoded, backing up the current received frame; calculating a time interval T1 between the current received frame and a previous frame sent by the multicast server that can be independently decoded; estimating a time delay T2 for re-coding the current received frame into a frame that can be independently decoded; and calculating a number N of frames that cannot be independently decoded between the current received frame and a next frame sent by the multicast server that can be independently decoded;
determining whether T1 is smaller than or equal to T2*N;
when T1 is smaller than or equal to T2*N, selecting (S103), according to a multicast group quick access request from a terminal, the previous frame sent by the multicast server that can be independently decoded as a frame to be played first, generating a playing strategy, sending the selected frame that can be independently decoded for first playing and the playing strategy to the terminal and sending a subsequent received frame that cannot be independently decoded to the terminal;
when T1 is greater than T2*N, re-coding (S102) the current received frame into a frame that can be independently decoded, selecting (S103), according to a multicast group quick access request from a terminal, the re-coded current frame as a frame to be played first, re-coding a subsequent frame sent by the multicast server that cannot be independently decoded between the selected frame to be played first and the next frame sent by the multicast server that can be independently decoded into a frame that can be independently decoded, generating a playing strategy, and sending the selected frame that can be independently decoded for first playing and the playing strategy to the terminal, and sending the subsequent re-coded frame that can be independently decoded to the terminal,
wherein the playing strategy comprises a playing start time of the selected frame for first playing that can be independently decoded, and the total playing time of the selected frame for first playing that can be independently decoded and the subsequent frame.

2. The method according to claim 1, wherein a broadband occupied by a re-coded frame that can be independently decoded is smaller than or equal to a broadband occupied by the frame before the re-coding.

3. A multicast access apparatus (10), **characterised in that** the apparatus comprise:
a determining module (11) configured to determine whether a current received frame sent by a multicast server can be independently decoded;
a backup module (15) configured to, when the determining module determines that the current received frame cannot be independently decoded, back up the current received frame;
a selecting module (13) configured for: when the current received frame cannot be independently decoded, calculating a time interval T1 between the current received frame and a previous frame sent by the multicast server that can be independently decoded; estimating a time delay T2 for re-coding the current received frame into a frame that can be independently decoded; calculating a number N of frames that cannot be independently decoded between the current received frame and a next frame sent by the multicast server that can be independently decoded; determining whether T1 is smaller than or equal to T2*N; when T1 is smaller than or equal to T2*N, selecting, according to a multicast group quick access request from a terminal, the previous frame sent by the multicast server that can be independently decoded as a frame to be played first; when T1 is greater than T2*N, re-coding the current received frame into a frame that can be independently decoded, selecting , according to a multicast group quick access request from a terminal, the re-coded current frame as a frame to be played first, re-coding a subsequent frame sent by the multicast server that cannot be independently decoded between the selected frame to be played first and the next frame sent by the multicast server that can be independently decoded into a frame that can be independently decoded;
a generating module configured for generating a playing strategy comprising a playing start time of the selected frame for first playing that can be independently decoded, and the total playing time of the selected frame for first playing that can be independently decoded and a subsequent frame; and
a first sending module (14) configured for when T1 is smaller than or equal to T2*N, sending the selected frame that can be independently decoded for first playing and the playing strategy to the terminal, and sending a subsequent received frame that cannot be independently decoded to the terminal; when T1 is greater than T2*N, sending the selected frame that can be independently decoded for first playing and the playing strategy to the terminal, and sending the subsequent re-coded frame that can be independently decoded to the terminal.

4. The apparatus according to claim 3, wherein a broadband occupied by a re-coded frame that can be independently decoded is smaller than or equal to a broadband occupied by the frame before the re-coding.

## Patentansprüche

1. Multicast-Zugriffsverfahren, **dadurch gekennzeichnet, dass** das Verfahren Folgendes umfasst: Bestimmen (S101), ob ein gegenwärtig empfangener Rahmen, der von einem Multicast-Server gesendet wird, unabhängig decodiert werden kann;
wenn der gegenwärtig empfangene Rahmen nicht unabhängig decodiert werden kann, Sichern des gegenwärtig empfangenen Rahmens; Berechnen eines Zeitintervalls T1 zwischen dem gegenwärtig empfangenen Rahmen und einem vorherigen Rahmen, der von dem Multicast-Server gesendet wurde, der unabhängig decodiert werden kann; Abschätzen einer Zeitverzögerung T2 zum Umcodieren des gegenwärtig empfangenen Rahmens in einen Rahmen, der unabhängig decodiert werden kann; und Berechnen einer Anzahl N von Rahmen, die nicht unabhängig decodiert werden können, zwischen dem gegenwärtig empfangenen Rahmen und einem nächsten Rahmen, der von dem Multicast-Server gesendet wird und der unabhängig decodiert werden kann;
Bestimmen, ob T1 kleiner oder gleich T2*N ist;
wenn T1 kleiner oder gleich T2*N ist, Auswählen (S103), gemäß einer Multicast-Gruppen-Schnellzugriffsanforderung von einem Endgerät, des vorherigen Rahmens, der von dem Multicast-Server gesendet wurde und der unabhängig als ein Rahmen decodiert werden kann, der zuerst abgespielt werden soll, Erzeugen einer Spielstrategie, Senden des ausgewählten Rahmens, der unabhängig für das erste Abspielen und die Spielstrategie decodiert werden kann, zu dem Endgerät und Senden eines nachfolgenden empfangenen Rahmens, der nicht unabhängig decodiert werden kann, zu dem Endgerät;
wenn T1 größer als T2*N ist, Neucodieren (S102) des gegenwärtig empfangenen Rahmens in einen Rahmen, der unabhängig decodiert werden kann, Auswählen (S103), gemäß einer Multicast-Gruppen-Schnellzugriffsanforderung von einem Endgerät, des neu codierten gegenwärtigen Rahmen als Rahmen, der zuerst abgespielt werden soll, Neucodieren eines nachfolgenden Rahmens, der durch den Multicast-Server gesendet wird, der nicht unabhängig zwischen dem ausgewählten Rahmen, der zuerst abgespielt werden soll, decodiert werden kann, und des nächsten Rahmens, der von dem Multicast-Server gesendet wird, der unabhängig in einen Rahmen decodiert werden kann, der unabhängig decodiert werden kann, Erzeugen einer Spielstrategie, und Senden des ausgewählten Rahmens, der unabhängig für das erste Abspielen und die Spielstrategie decodiert werden kann, zu dem Endgerät, und Senden des nachfolgenden neu codierten Rahmens, der unabhängig decodiert werden kann, zu dem Endgerät;
wobei die Abspielstrategie Folgendes umfasst: eine Spielstartzeit des ausgewählten Rahmens für die erste Wiedergabe, die unabhängig decodiert werden kann, und die Gesamtspielzeit des ausgewählten Rahmens für die erste Wiedergabe, die unabhängig decodiert werden kann, und den nachfolgenden Rahmen.

2. Verfahren nach Anspruch 1, wobei ein Breitband, das von einem neu codierten Rahmen eingenommen wird, der unabhängig decodiert werden kann, kleiner oder gleich einem Breitband ist, das durch den Rahmen vor der Neucodierung eingenommen wird.

3. Multicast-Zugriffsvorrichtung (10), **dadurch gekennzeichnet, dass** die Vorrichtung Folgendes umfasst:
ein Bestimmungsmodul (11), das dafür konfiguriert ist, zu bestimmen, ob ein gegenwärtig empfangener Rahmen, der von einem Multicast-Server gesendet wird, unabhängig decodiert werden kann;
ein Sicherungsmodul (15), das dafür konfiguriert ist, wenn das Bestimmungsmodul bestimmt, dass der gegenwärtig empfangene Rahmen nicht unabhängig decodiert werden kann, den gegenwärtig empfangenen Rahmen zu sichern;
ein Auswahlmodul (13), das für Folgendes konfiguriert ist: wenn der gegenwärtig empfangene Rahmen nicht unabhängig decodiert werden kann, Berechnen eines Zeitintervalls T1 zwischen dem gegenwärtig empfangenen Rahmen und einem vorherigen Rahmen, der von dem Multicast-Server gesendet wurde, der unabhängig decodiert werden kann; Abschätzen einer Zeitverzögerung T2 zum Umcodieren des gegenwärtig empfangenen Rahmens in einen Rahmen, der unabhängig decodiert werden kann; Berechnen einer Anzahl N von Rahmen, die nicht unabhängig decodiert werden können, zwischen dem gegenwärtig empfangenen Rahmen und einem nächsten Rahmen, der von dem Multicast-Server gesendet wird und der unabhängig decodiert werden kann; Bestimmen, ob T1 kleiner oder gleich T2*N ist; wenn T1 kleiner oder gleich T2*N ist, Auswählen, gemäß einer Multicast-Gruppen-Schnellzugriffsanforderung von einem Endgerät, des vorherigen Rahmens, der von dem Multicast-Server gesendet wurde und der unabhängig als ein Rahmen decodiert werden kann, der zuerst abgespielt werden soll; wenn T1 größer als T2*N ist, Neucodieren des gegenwärtig empfangenen Rahmens in einen Rahmen, der unabhängig decodiert werden kann, Auswählen, gemäß einer Multicast-Gruppen-Schnellzugriffsanforderung von einem Endgerät, des neu codierten gegenwärtigen Rahmen als Rahmen, der zuerst abgespielt werden soll, Neucodieren eines nachfolgenden Rahmens, der durch den Multicast-Server gesendet wird, der nicht unabhängig zwischen dem ausgewählten Rahmen, der zuerst abgespielt werden soll, decodiert werden kann, und des nächsten Rahmens, der von dem Multicast-Server gesendet wird, der unabhängig in einen Rahmen decodiert werden kann, der unabhängig decodiert werden kann,
ein Erzeugungsmodul, das zum Erzeugen einer Spielstrategie konfiguriert ist, die Folgendes umfasst: eine Spielstartzeit des ausgewählten Rahmens für die erste Wiedergabe, die unabhängig decodiert werden kann, und die Gesamtspielzeit des ausgewählten Rahmens für die erste Wiedergabe, die unabhängig decodiert werden kann, und einen nachfolgenden Rahmen; und
ein erstes Sendemodul (14), das, wenn T1 kleiner oder gleich T2*N ist, für Folgendes konfiguriert ist: Senden des ausgewählten Rahmens, der unabhängig für das erste Abspielen und die Spielstrategie decodiert werden kann, zu dem Endgerät, und Senden eines nachfolgenden empfangenen Rahmens, der nicht unabhängig decodiert werden kann, zu dem Endgerät; wenn T1 größer als T2*N ist, Senden des ausgewählten Rahmens, der unabhängig für das erste Abspielen und die Spielstrategie decodiert werden kann, zu dem Endgerät, und Senden des nachfolgenden neu codierten Rahmens, der unabhängig decodiert werden kann, zu dem Endgerät.

4. Vorrichtung nach Anspruch 3, wobei ein Breitband, das von einem neu codierten Rahmen eingenommen wird, der unabhängig decodiert werden kann, kleiner oder gleich einem Breitband ist, das durch den Rahmen vor der Neucodierung eingenommen wird.

## Revendications

1. Procédé d'accès multidiffusion, **caractérisé en ce que** le procédé comprend les étapes suivantes :
détermination (S101) pour savoir si une trame reçue actuelle envoyée par un serveur de multidiffusion peut être décodée de manière indépendante ;
lorsque la trame reçue actuelle ne peut pas être décodée de manière indépendante, sauvegarde de la trame reçue actuelle ; calcul d'un intervalle de temps T1 entre la trame reçue actuelle et une trame précédente envoyée par le serveur de multidiffusion qui peut être décodée de manière indépendante ; estimation d'un délai T2 pour recoder la trame reçue actuelle en une trame pouvant être décodée de manière indépendante ; et calcul d'un nombre N de trames ne pouvant pas être décodées de manière indépendante entre la trame reçue actuelle et une trame suivante envoyée par le serveur de multidiffusion qui peut être décodée de manière indépendante ;
détermination pour savoir si T1 est inférieur ou égal à T2*N ;
lorsque T1 est inférieur ou égal à T2*N, sélection (S103), en fonction d'une demande d'accès rapide à un groupe de multidiffusion provenant d'un terminal, de la trame précédente envoyée par le serveur de multidiffusion qui peut être décodée de manière indépendante en tant que trame à lire en premier, élaboration d'une stratégie de lecture, envoi de la trame sélectionnée qui peut être décodée de manière indépendante pour une lecture en premier, et de la stratégie de lecture au terminal, et envoi d'une trame reçue suivante qui ne peut pas être décodée de manière indépendante, au terminal ;
lorsque T1 est supérieur à T2*N, recodage (S102) de la trame reçue actuelle en une trame pouvant être décodée de manière indépendante, sélection (S103), en fonction d'une demande d'accès rapide à un groupe de multidiffusion provenant d'un terminal, de la trame actuelle recodée en tant que trame à lire en premier, recodage d'une trame suivante envoyée par le serveur de multidiffusion qui ne peut être décodée de manière indépendante entre la trame sélectionnée à lire en premier et la trame suivante envoyée par le serveur de multidiffusion qui peut être décodée de manière indépendante en une trame qui peut être décodée de manière indépendante, élaboration d'une stratégie de lecture, envoi de la trame sélectionnée qui peut être décodée de manière indépendante pour une lecture en premier, et de la stratégie de lecture au terminal, et envoi de la trame recodée suivante qui peut être décodée de manière indépendante, au terminal,
dans lequel la stratégie de lecture comprend une heure de début de lecture de la trame sélectionnée pour une lecture en premier qui peut être décodée de manière indépendante, et la durée de lecture totale de la trame sélectionnée pour une lecture en premier qui peut être décodée de manière indépendante et de la trame suivante.

2. Procédé selon la revendication 1, dans lequel une bande large occupée par une trame recodée qui peut être décodée de manière indépendante est inférieure ou égale à une bande large occupée par la trame avant le recodage.

3. Appareil d'accès multidiffusion (10), **caractérisé en ce que** l'appareil comprend :
un module de détermination (11) configuré pour déterminer si une trame reçue actuelle envoyée par un serveur de multidiffusion peut être décodée de manière indépendante ;
un module de sauvegarde (15) configuré pour, lorsque le module de détermination détermine que la trame reçue actuelle ne peut pas être décodée de manière indépendante, sauvegarder la trame reçue actuelle ;
un module de sélection (13) configuré pour : lorsque la trame reçue actuelle ne peut pas être décodée de manière indépendante, calculer un intervalle de temps T1 entre la trame reçue actuelle et une trame précédente envoyée par le serveur de multidiffusion qui peut être décodée de manière indépendante ; estimer un délai T2 pour recoder la trame reçue actuelle en une trame pouvant être décodée de manière indépendante ; calculer un nombre N de trames ne pouvant pas être décodées de manière indépendante entre la trame reçue actuelle et une trame suivante envoyée par le serveur de multidiffusion qui peut être décodée de manière indépendante ; déterminer si T1 est inférieur ou égal à T2*N ; si T1 est inférieur ou égal à T2*N, sélectionner, en fonction d'une demande d'accès rapide à un groupe de multidiffusion provenant d'un terminal, la trame précédente envoyée par le serveur de multidiffusion qui peut être décodée de manière indépendante en tant que trame à lire en premier ; lorsque T1 est supérieur à T2*N, recoder la trame reçue actuelle en une trame pouvant être décodée de manière indépendante, sélectionner, en fonction d'une demande d'accès rapide à un groupe de multidiffusion provenant d'un terminal, la trame actuelle recodée en tant que trame à lire en premier, recoder une trame suivante envoyée par le serveur de multidiffusion qui ne peut être décodée de manière indépendante entre la trame sélectionnée à lire en premier et la trame suivante envoyée par le serveur de multidiffusion qui peut être décodée de manière indépendante en une trame qui peut être décodée de manière indépendante ;
un module d'élaboration configuré pour élaborer une stratégie de lecture comprenant une heure de début de lecture de la trame sélectionnée pour une lecture en premier qui peut être décodée de manière indépendante, et la durée de lecture totale de la trame sélectionnée pour une lecture en premier qui peut être décodée de manière indépendante et d'une trame suivante ; et
un premier module d'envoi (14) configuré pour, lorsque T1 est inférieur ou égal à T2*N, envoyer la trame sélectionnée qui peut être décodée de manière indépendante pour une lecture en premier, et la stratégie de lecture au terminal, et envoyer une trame reçue suivante qui ne peut pas être décodée de manière indépendante, au terminal ; lorsque T1 est supérieur à T2*N, envoyer la trame sélectionnée qui peut être décodée de manière indépendante pour une lecture en premier, et la stratégie de lecture au terminal, et envoyer la trame recodée suivante qui peut être décodée de manière indépendante, au terminal.

4. Appareil selon la revendication 3, dans lequel une bande large occupée par une trame recodée qui peut être décodée de manière indépendante est inférieure ou égale à une bande large occupée par la trame avant le recodage.
